(19) Europäisches Patentamt
European Patent Office
Office européen des brevets

(11) **EP 3 789 635 B1**

(12) **EUROPÄISCHE PATENTSCHRIFT**

(45) Veröffentlichungstag und Bekanntmachung des Hinweises auf die Patenterteilung:
**01.06.2022   Patentblatt 2022/22**

(21) Anmeldenummer: **19195055.9**

(22) Anmeldetag: **03.09.2019**

(51) Internationale Patentklassifikation (IPC):
**F16H 55/06** *(2006.01)*      **F16H 55/14** *(2006.01)*
**F16H 55/17** *(2006.01)*

(52) Gemeinsame Patentklassifikation (CPC):
**F16H 55/14; F16H 55/06; F16H 55/17**

(54) **ZAHNRAD**

GEARWHEEL

ROUE DENTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.03.2021   Patentblatt 2021/10**

(73) Patentinhaber: **IMS Gear SE & Co. KGaA**
**78166 Donaueschingen (DE)**

(72) Erfinder:
• **Mauerlechner, Gregor**
  **78652 Deißlingen (DE)**
• **Schlude, Sebastian**
  **78048 Villingen-Schwenningen (DE)**
• **Bernhard, Markus**
  **78359 Nenzingen (DE)**
• **Kuhn, Jonas**
  **79256 Buchenbach (DE)**
• **Birk, Sebastian**
  **78647 Trossingen (DE)**
• **Oberle, Stephan**
  **78050 Villingen-Schwenningen (DE)**

(74) Vertreter: **Westphal, Mussgnug & Partner**
**Patentanwälte mbB**
**Am Riettor 5**
**78048 Villingen-Schwenningen (DE)**

(56) Entgegenhaltungen:
**DE-A1-102009 000 014     DE-B3-102004 064 237**
**GB-A- 989 898**

**Beschreibung**

Die vorliegende Erfindung betrifft ein Zahnrad.

Zahnräder spielen bei der Drehmomentübertragung und Drehmomentwandlung in einem Antriebsstrang eine zentrale Rolle. Während bei geradverzahnten Zahnrädern, in vielen Fällen als sogenannte Stirnräder ausgebildet, die axiale Belastung auf das Stirnrad vergleichsweise gering ist, treten vor allem bei schrägverzahnten Stirnrädern und bei Schnecken- oder Schraubrädern hohe axiale Belastungen auf, wodurch Kippmomente in die Zahnräder eingeleitet werden. Die axialen Belastungen dürfen aber nicht zu einer Verformung des Zahnrads führen, da es sonst zu Fehleingriffen mit einer erhöhten Geräuschentwicklung und zu einem erhöhten Verschleiß kommt. Zwar kann man den Verformungen mit einer Erhöhung der Breite des Zahnrads entgegenwirken, allerdings führt der hiermit verbundene erhöhte Materialeinsatz zu einer Gewichtserhöhung und zu einer Zunahme des benötigten Bauraums, was meistens nicht erwünscht ist. Die Gewichtserhöhung kann mit einem Speichendesign begrenzt werden. Zudem können Zahnräder aus mehreren Materialien aufgebaut sein, um das Gewicht gering zu halten. Es ist daher bekannt, die axiale Steifigkeit mit der Verwendung von Rippen zu erhöhen. Hierdurch wird das Material nur dort eingesetzt, wo es für die Erhöhung der axialen Steifigkeit gebraucht wird. Bekannte Rippen von Zahnrädern weisen einen parabolischen Fuß, auch als Baumwurzelfuß bezeichnet, auf. Bei einem derartigen Rippen-Design wird der Querkraft-Biegespannungsverlauf in den einzelnen Rippen berücksichtigt. Die Rippe kann zum Mittelpunkt des Zahnrads breiter werden, wodurch sowohl die torsionale als auch die axiale Auslenkung des Zahnrads bei Krafteinleitung über den Zahnkranz verringert wird.

Weitere Rippen-Designs sind in der DE 10 2012 102 777 A1, der DE 10 2014 003 441 A1, der DE 10 2017 201 383 A1, der GB 989 898 A, der DE 10 2004 064 237 B3, der DE 10 2009 000 014 A1 und in der EP 2 899 430 A1 offenbart.

Die in der EP 2 899 430 A1 offenbarten Zahnräder mit meanderförmigen Rippen zeichnen sich dadurch aus, dass vor allem bei hohen axialen Kräften, wie sie bei Schrägverzahnungen auftreten, nur geringe axiale Verformungen auftreten. Die erhöhte axiale Steifigkeit insbesondere darin begründet, dass Wandungsanteile, die bei herkömmlichen Zahnrädern hauptsächlich in der Mitte der Zahnräder angeordnet sind, in die Randbereiche verschoben werden. Für den Fall, dass Zahnräder mit meanderförmigen Rippen im Spritzguss gefertigt werden, müssen aber aufgrund von ungünstigen Fließwegen gewisse Qualitätseinbußen hingenommen werden, insbesondere in Form einer reduzierten Homogenität des Kunststoffs.

Das in der DE 10 2017 201 383 A1 offenbarte Rippen-Design umfasst Rippen, welche sowohl konvexe als auch konkav gewölbte Abschnitte aufweisen. Die in die Rippen eingeleiteten Kräfte erzeugen aber Biegemomenten innerhalb der Rippen, weshalb die radiale Belastbarkeit begrenzt ist.

Aufgabe einer Ausführungsform der vorliegenden Erfindung ist es, ein Zahnrad anzugeben, mit welchem es mit einfachen und kostengünstigen Mitteln möglich ist, ein Zahnrad zu schaffen, welches bei geringem Bauraum eine hohe axiale Steifigkeit und eine hohe radiale Belastbarkeit aufweist und sich für verschiedene Fertigungsverfahren eignet.

Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft ein Zahnrad, umfassend

- ein Einlegeteil, welches einen Einlegeteil-Außendurchmesser und einen Aufnahmeabschnitt mit einem drehmomentübertragenden Durchmesser zum Ausbilden einer Verbindung mit einem benachbart angeordneten Bauteil aufweist, und
- ein mit dem Einlegeteil formschlüssig und/oder materialschlüssig und/oder reibschlüssig verbundenes Verbindungsteil mit einem Zahnkranz,
- wobei das Verbindungsteil eine Anzahl von Rippen aufweist oder das Verbindungsteil von einer Anzahl von Rippen gebildet wird,
- die Rippen entlang jeweils einer Tangente verlaufen, die an einem Tangentenkreis anliegt,
- die Rippen eine Rippenstärke aufweisen, und
- der Tangentenkreis einen Tangentenkreisdurchmesser aufweist, der größer als der oder gleich dem drehmomentübertragenden Durchmesser und kleiner als der oder gleich einem maximalen Durchmesser ist, der wie folgt definiert ist:

$$dA = dEa + 6\ RB$$

Das Zahnrad weist eine Drehachse auf, um welches es im Betrieb gedreht wird. Das Einlegeteil und das Verbindungsteil sind konzentrisch zur Drehachse angeordnet. Der Verlauf der Rippen des Verbindungsteils bestimmt sich nach folgenden Vorgaben: Ausgehend vom ebenfalls konzentrisch zur Drehachse angeordneten Tangentenkreis, der auf dem Einlegeteil angeordnet ist, wird eine Anzahl von gleichmäßig um den Umfang des Tangentenkreises gebildet.

Die Rippen verlaufen entlang dieser Tangenten auf dem Verbindungsteil. Je nach Ausgestaltung des Zahnrads kann sich der Berührungspunkt, in welchem die Tangenten den Tangentenkreis berühren, auf dem Einlegeteil befinden. In diesem Fall können die Rippen den Berührungspunkt nicht erreichen. Daher können auf einer Tangente zwei voneinander vom Einlegeteil getrennte Rippen verlaufen. Es ist aber genauso gut möglich, auf einer Tangente nur eine Rippe verlaufen zu lassen. Da Tangenten definitionsgemäß Geraden sind, verlaufen die Rippen auch gerade und weisen in der Ebene, in welcher die Tangenten verlaufen, keine Krümmung auf. Unter der Rippenstärke soll die maximale Breite der Rippen in einer senkrecht zur Drehachse verlaufenden Ebene verstanden werden.

Wenn in Umfangsrichtung wirkende Kräfte an den Zähnen des Zahnkranzes angreifen, werden die Rippen je nach Anordnung in Bezug auf den Angriffspunkt der Kräfte auf Zug oder Druck belastet. Die Kräfte werden direkt in den Bereich des Einlegeteils eingeleitet, wodurch sich eine hohe torsionale Steifigkeit ergibt.

Gemäß einer weiteren Ausführungsform weist der Aufnahmeabschnitt einen Einlegeteil-Innendurchmesser zum Ausbilden einer Wellen-Naben-Verbindung mit dem benachbart angeordneten Bauteil auf, der dem drehmomentübertragenden Durchmesser entspricht. Das benachbart angeordnete Bauteil kann in diesem Ausführungsbeispiel insbesondere eine das Zahnrad durchdringende oder in das Zahnrad hineinragende Welle sein. Der drehmomentübertragende Durchmesser ist derjenige Durchmesser, an welchem die Welle mit dem Einlegeteil in Kontakt steht. Das benachbart angeordnete Bauteil, hier die Welle, schließt sich radial nach innen an das in diesem Ausführungsbeispiel hülsenförmige Einlegeteil an. Die oben genannten technischen Effekte stellen sich in dieser Ausführungsform gleichermaßen ein.

Nach Maßgabe einer weiteren Ausführungsform weist der Aufnahmeabschnitt eine Mitnahmeverzahnung zum Ausbilden der Wellen-Naben-Verbindung auf, wobei die Mitnahmeverzahnung einen Mitnahmeverzahnungsinnendurchmesser aufweist, der dem drehmomentübertragenden Durchmesser entspricht, und der Tangentenkreisdurchmesser größer als der oder gleich dem Mitnahmeverzahnungsinnendurchmesser ist. In dieser Ausführungsform werden die in Umfangsrichtung in den Zahnkranz eingeleiteten Kräfte direkt in die Mitnahmeverzahnung eingeleitet, wodurch sich ein besonders günstiger Kraftfluss und eine hohe torsionale Steifigkeit ergeben.

In einer fortentwickelten Ausführungsform entspricht der Einlegeteil-Außendurchmesser dem drehmomentübertragenden Durchmesser. In dieser Ausführungsform findet die Drehmomentübertragung zwischen dem Zahnrad und dem benachbart angeordneten Bauteil axial versetzt zum Zahnkranz statt. Das benachbart angeordnete Bauteil schließt sich, anders als bei der oben beschriebenen Wellen-Naben-Verbindung, radial nach außen dem Einlegteil an. Die oben genannten technischen Effekte stellen sich in dieser Ausführungsform gleichermaßen ein.

Nach einer fortgebildeten Ausführungsform weist der Aufnahmeabschnitt eine Laufverzahnung zum Ausbilden einer Laufverbindung auf, wobei die Laufverzahnung einen Laufverzahnungsinnendurchmesser aufweist, der dem drehmomentübertragendem Durchmesser entspricht, und der Tangentenkreisdurchmesser größer als der oder gleich dem Laufverzahnungsinnendurchmesser ist. Auch in dieser Ausführungsform findet die Drehmomentübertragung an ein benachbart angeordnetes Bauteil axial versetzt zum Zahnkranz statt, in diesem Fall aber mit einer Laufverzahnung, so dass das benachbart angeordnete Bauteil selbst ein Zahnrad ist. Die oben genannten technischen Effekte stellen sich in dieser Ausführungsform gleichermaßen ein.

In einer weitergebildeten Ausführungsform können jeweils zwei Rippen im Verbindungsteil-Außendurchmesser oder im Bereich des Verbindungsteil-Außendurchmessers miteinander verbunden sein. Wie erwähnt, werden einige Rippen auf Zug und andere Rippen auf Druck belastet, wenn in Umfangsrichtung in den Zahnkranz eingeleitete Kräfte wirken. Dadurch, dass die auf Druck und auf Zug belastete Rippen im Verbindungsteil-Außendurchmesser oder im Bereich des Verbindungsteil-Außendurchmessers miteinander verbunden sind, ergeben sich ein besonders günstiger Kraftfluss und eine hohe torsionale Steifigkeit.

Gemäß einer fortgebildeten Ausführungsform ist der Verlauf der Rippen so gewählt, dass sich zumindest zwei Rippen kreuzen. Insbesondere dann, wenn die Rippen im Verbindungsteil-Außendurchmesser oder im Bereich des Verbindungsteil-Außendurchmessers miteinander verbunden sind und sich zumindest zwei Rippen kreuzen, bilden die Rippen ein rautenförmiges Fachwerk. Dort, wo die beiden Rippen sich kreuzen, werden Knotenpunkte gebildet, welche sich ebenfalls günstig auf den Kraftverlauf und die torsionale Steifigkeit auswirken.

Bei einer weiteren Ausführungsform kann das Verbindungsteil eine erste Stirnfläche und eine zweite Stirnfläche bilden, wobei das Verbindungsteil zumindest eine Vertiefung aufweist, welche von einer der beiden Stirnflächen ausgeht und einen Vertiefungsgrund bildet, wobei sich die Rippen ausgehend vom Vertiefungsgrund zu derjenigen Stirnfläche hin oder über diejenige Stirnfläche hinaus erstrecken, von welcher die Vertiefung ausgeht. Grundsätzlich kann das Verbindungsteil nach Art eines Fahrrad-Rades speichenförmig ausgebildet sein, so dass die Rippen im Wesentlichen die einzige Verbindung zwischen dem Einlegeteil und dem Außenteil bilden. Das Verbindungsteil ist bei einer speichenförmigen Ausbildung in axialer Richtung entlang der Drehachse nicht geschlossen. In dieser Ausführungsform ist das Verbindungsteil geschlossen, da sich der Vertiefungsgrund zwischen dem Einlegeteil und dem Verbindungsteil ohne Unterbrechung erstreckt. Die Rippen gehen vom Vertiefungsgrund aus. Die ohne Unterbrechung geschlossene Ausbildung des Verbindungsteils trägt ebenfalls zu einem gleichmäßigen Kraftfluss und zu einer erhöhten torsionalen Steifigkeit bei.

Eine weitergebildete Ausführungsform zeichnet sich dadurch aus, dass das Verbindungsteil zumindest eine erste Vertiefung und zumindest eine zweite Vertiefung aufweist, wobei die erste Vertiefung von der ersten Stirnfläche und die zweite Vertiefung von der zweiten Stirnfläche ausgehen. In dieser Ausführungsform geht zumindest eine Vertiefung von jeweils einer Stirnfläche des Verbindungsteils aus. Der Vertiefungsgrund wird somit zur axialen Mitte des Verbindungsteils hin verschoben, so dass das Verbindungsteil einen hohen Symmetriegrad aufweisen kann. Die torsionale Steifigkeit ist dann unabhängig oder weitgehend unabhängig von der Belastungsrichtung.

Nach Maßgabe einer weiteren Ausführungsform sind die ersten Vertiefungen radial und/oder in Umfangrichtung zu einer Drehachse des Zahnrads versetzt angeordnet. Die Vertiefungen sind gleichmäßiger verteilt angeordnet, wodurch sich Materialhäufungen vermeiden lassen, was sich günstig auf die Materialhomogenität auswirkt, wenn das Zahnrad in einem Gießverfahren hergestellt wird. Zudem lässt sich die Biegesteifigkeit erhöhen.

Eine weitere Ausführungsform zeichnet sich dadurch aus, dass die ersten Vertiefungen zwischen den zweiten Vertiefungen liegen. Hierdurch werden Überlappungsbereiche vermieden, in welchen entlang der Drehachse gesehen und bezogen auf einen Radius zwei Vertiefungen direkt nebeneinander liegen. Auch durch diese Maßnahme erhöht sich die torsionale Steifigkeit.

Eine weitere Ausführungsform ist dadurch gekennzeichnet, dass das Zahnrad eine Breite aufweist und sich die ersten Vertiefungen ausgehend von der ersten Stirnfläche und sich die zweiten Vertiefungen ausgehend von der zweiten Stirnfläche über mehr als die halbe Breite erstrecken. Hierdurch ergibt sich ein mäanderformiger Verlauf bezogen auf eine Schnittebene, in welcher die Drehachse liegt. Es ergibt sich eine Materialkonzentration an den Stirnflächen, wodurch die axialen und torsionalen Steifigkeiten erhöht werden.

Nach einer weiteren Ausführungsform sind in der ersten Vertiefung eine Anzahl von ersten Rippen und in der zweiten Vertiefung eine Anzahl von zweiten Rippen angeordnet, die in Umfangrichtung versetzt zueinander angeordnet sind. Hierdurch lassen sich Materialhäufungen vermeiden, was sich günstig auf die Materialhomogenität auswirkt, wenn das Zahnrad in einem Gießverfahren hergestellt wird.

In einer weiteren Ausführungsform ist das Einlegeteil aus Metall gefertigt. Die Verwendung von Metall ermöglicht die Übertragung von hohen Drehmomenten auf geringen Durchmessern, so dass ein Einlegeteil mit einem vergleichsweise geringen Durchmesser verwendet werden kann. Auch hierdurch wird Bauraum gespart.

In einer weiteren Ausführungsform kann das Verbindungsteil aus einem Kunststoff gefertigt sein. Die Verwendung von Kunststoff ermöglicht die Fertigung des Verbindungsteils im Spritzgussverfahren, wodurch hohe Stückzahlen zu geringen Kosten gefertigt werden können. Mit dem vorschlagsgemäßen Rippen-Design wird ein gleichmäßiges Fließverhalten des Kunststoffs in den Spritzgussformen erzielt, so dass Lunker oder ähnliche Inhomogenitäten vermieden werden können.

Gemäß einer fortgebildeten Ausführungsform wird der Zahnkranz von einem Außenteil gebildet, welches mit dem Verbindungsteil formschlüssig und/oder materialschlüssig und/oder reibschlüssig verbunden ist. Das Außenteil kann aus einem anderen Material hergestellt sein als das Verbindungsteil. Somit kann das Material auf die besonderen Belastungen im Zahnkranz hin gewählt werden, während das Material des Verbindungsteils auf die besonderen Belastungen im Verbindungsteil hin ausgewählt werden kann. Insgesamt entsteht ein auf die Belastungen hin optimiertes angepasstes Zahnrad mit einer erhöhten Lebensdauer.

Bei einer weitergebildeten Ausführungsform kann das Verbindungsteil einen sich radial nach außen dem Einlegeteil anschließenden kreisringförmigen inneren Verbindungsabschnitt aufweisen, mit welchem die Rippen radial nach innen verbunden sind, und einen sich radial nach innen dem Außenteil anschließenden kreisförmigen äußeren Verbindungsabschnitt aufweist, mit welchem die Rippen radial nach außen verbunden sind. Es ist möglich, dass die Rippen direkt mit dem Einlegeteil und/oder dem Außenteil verbunden sind, so dass das Verbindungsteil speichenförmig ausgebildet ist. Allerdings wird mit den kreisringförmigen Verbindungsabschnitten eine vollumfängliche Verbindung zwischen dem Verbindungsteil und dem Einlegeteil sowie zwischen dem Verbindungsteil und dem Außenteil geschaffen und die Kontaktfläche zum Außenteil und/oder dem Einlegeteil vergrößert. Weiterhin werden die Rippen vom kreisringförmigen Verbindungsabschnitt versteift. Infolgedessen werden der Kraftverlauf vergleichmäßigt und die torsionale Steifigkeit erhöht. Insbesondere werden Spannungsspitzen vermieden.

Bei einer weiteren Ausführungsform sind das Außenteil aus einem ersten Kunststoff und das Verbindungsteil einem zweiten Kunststoff gefertigt. Der erste Kunststoff ist ein Hochleistungsthermoplast oder ein technischer Thermoplast und/oder der zweite Kunststoff ist ein Hochleistungsthermoplast, ein technischer Thermoplast oder ein Duroplast. Das Außenteil mit dem Zahnkranz ist hohem Verschleiß und/oder hohen Kräften ausgesetzt, den man mit Hochleistungsthermoplasten besonders wirkungsvoll begegnen kann, ohne dass die Hochleistungsthermoplaste faserverstärkt werden müssen. Als Hochleistungsthermoplaste eignen sich insbesondere die teilkristallinen Hochleistungsthermoplaste der Familie der Polyaryletherketone (PAEK) wie PEK (Polyetherketon), PEEK (Polyetheretherketon) oder PEKK (Polyetherketoneketon). Ebenfalls eignen sich PPS (Polyphenylensulfid) oder PPA (Polyphthalamid). Auch der zweite Kunststoff kann ein Hochleistungsthermoplast sein, so dass auch Ausführungsformen denkbar sind, in denen das Verbindungsteil und das Außenteil aus demselben Kunststoff gefertigt werden. In diesem Fall bietet es sich aber an, den zweiten Kunststoff, aus dem das Verbindungsteil gefertigt ist, faserverstärkt auszuführen, um die axiale Steifigkeit zu erhöhen. Die Verwendung von faserverstärkten Kunststoffen für das Außenteil mit dem Zahnkranz ist insofern nachteilig, als dass hierdurch am Zahnkranz ein erhöhter Verschleiß einstellen würde und es zu einem Faserabrieb oder Faserbruch kommen kann. Insbesondere dann, wenn der zweite Kunststoff des Verbindungsteils faserverstärkt ist, können auch weniger hochwertige und damit günstigere Kunststoffe wie technische Thermoplaste, beispielsweise teilkristalline Thermoplaste wie PET (Polyethylenterephthalat), PA (Polyamid) oder POM (Polyoxymethylen) einsetzen. Auch können Duroplaste wie Polyester verwendet werden. Für das Außenteil können ebenfalls PA (Polyamid) oder POM (Polyoxymethylen) eingesetzt werden, die zu den technischen Thermoplasten zählen.

Wenn das Einlegeteil aus Metall und das Verbindungsteil sowie das Außenteil aus Kunststoff gefertigt sind, liegt ein sogenanntes Mehrkomponentenzahnrad vor. Jedes Teil ist anderen Belastungen ausgesetzt. Ein besonderer Vorteil dieser Mehrkomponentenzahnräder liegt darin, dass für jedes Teil des Mehrkomponentenzahnrads das zu den entsprechenden Belastungen passende Material gewählt werden kann. Verschiedene Ausführungsformen von Mehrkomponentenzahnrädern sind in der DE 101 27 224 A1 und der EP 1 777 439 B1 offenbart.

Beispielhafte Ausführungsformen der Erfindung werden im Folgenden unter Bezugnahme auf die beigefügten Zeichnungen näher erläutert. Es zeigen

Figur 1A    eine Seitenansicht auf ein erstes Ausführungsbeispiel eines erfindungsgemäßen Zahnrads,

Figur 1B    eine Schnittdarstellung des ersten Ausführungsbeispiels des Zahnrads entlang der in Figur 1A definierten Schnittebene A-A,

Figur 2A    eine prinzipielle Schnittdarstellung eines zweiten Ausführungsbeispiels des erfindungsgemäßen Zahnrads,

Figur 2B    eine auf Figur 2A bezogene schematische Darstellung zum Erläutern des erfindungsgemäßen Prinzips,

Figur 3A    eine prinzipielle Schnittarstellung eines dritten Ausführungsbeispiels des erfindungsgemäßen Zahnrads,

Figur 3B    eine auf Figur 3A bezogene schematische Darstellung zum Erläutern des erfindungsgemäßen Prinzips,

Figur 4A    eine Seitenansicht auf ein viertes Ausführungsbeispiel des erfindungsgemäßen Zahnrads,

Figur 4B    eine Schnittdarstellung durch das vierte Ausführungsbeispiel des erfindungsgemäßen Zahnrads entlang der in Figur 4A definierten Schnittebene A-A,

Figur 4C    eine Schnittdarstellung durch das vierte Ausführungsbeispiel des erfindungsgemäßen Zahnrads entlang der in Figur 4A definierten Schnittebene B-B,

Figur 5A    eine Seitenansicht auf ein fünftes Ausführungsbeispiel des erfindungsgemäßen Zahnrads,

Figur 5B    eine Schnittdarstellung durch das fünfte Ausführungsbeispiel des erfindungsgemäßen Zahnrads entlang der in Figur 5A definierten Schnittebene A-A,

Figur 5C    eine Schnittdarstellung durch das fünfte Ausführungsbeispiel des erfindungsgemäßen Zahnrads entlang der in Figur 5A definierten Schnittebene B-B,

Figur 6    eine Seitenansicht auf ein sechstes Ausführungsbeispiel des erfindungsgemäßen Zahnrads,

Figur 7    eine Seitenansicht auf ein siebtes Ausführungsbeispiel des erfindungsgemäßen Zahnrads,

Figur 8A    eine Seitenansicht auf ein achtes Ausführungsbeispiel des erfindungsgemäßen Zahnrads,

Figur 8B    eine Schnittdarstellung durch das achte Ausführungsbeispiel des erfindungsgemäßen Zahnrads entlang der in Figur 8A definierten Schnittebene A-A,

Figur 8C    eine Schnittdarstellung durch das achte Ausführungsbeispiel des erfindungsgemäßen Zahnrads entlang der in Figur 8A definierten Schnittebene B-B,

Figur 9    eine Seitenansicht auf ein neuntes Ausführungsbeispiel des erfindungsgemäßen Zahnrads, wobei nur das Verbindungsteil dargestellt ist,

Figur 10     eine Draufsicht auf ein neuntes Ausführungsbeispiel des erfindungsgemäßen Zahnrads im montierten Zustand, und

Figur 11     eine Draufsicht auf ein zehntes Ausführungsbeispiel des erfindungsgemäßen Zahnrads im montierten Zustand.

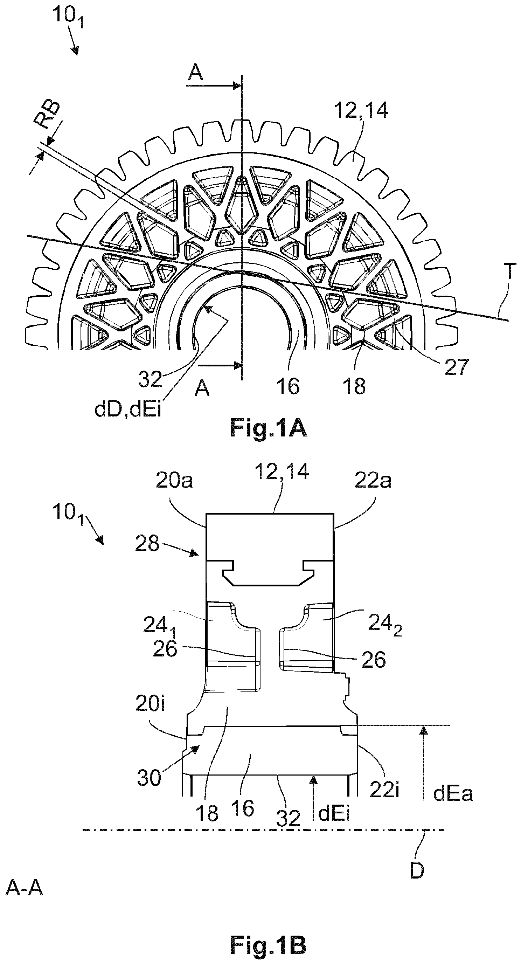

Die Figuren 1A und 1B stellen ein erfindungsgemäßes Zahnrad $10_1$ nach einem ersten Ausführungsbeispiel dar. Das Zahnrad $10_1$ weist ein Außenteil 12 mit einem Zahnkranz 14, ein Einlegeteil 16 und ein zwischen dem Einlegeteil 16 und dem Außenteil 12 angeordnetes Verbindungsteil 18 auf. Nicht dargestellt ist ein Ausführungsbeispiel, bei dem der Zahnkranz 14 vom Verbindungsteil 18 gebildet wird und das Zahnrad 10 kein separates Außenteil 12 aufweist. Das Einlegeteil 16, das Verbindungsteil 18 und das Außenteil 12 sind konzentrisch zu einer Drehachse D des Zahnrads $10_1$ angeordnet. Im ersten Ausführungsbeispiel ist das Einlegeteil 16 aus Metall gefertigt, während das Außenteil 12 aus einem ersten Kunststoff und das Verbindungsteil 18 aus einem zweiten Kunststoff gefertigt sind. Das Außenteil 12 mit dem Zahnkranz 14 ist hohem Verschleiß ausgesetzt, den man mit Hochleistungsthermoplasten besonders wirkungsvoll begegnen kann, ohne dass die Hochleistungsthermoplaste faserverstärkt werden müssen. Als Hochleistungsthermoplaste eignen sich insbesondere die teilkristallinen Hochleistungsthermoplaste der Familie der Polyaryletherketone (PAEK) wie PEK (Polyetherketon), PEEK (Polyetheretherketon) oder PEKK (Polyetherketoneketon). Ebenfalls eignen sich PPS (Polyphenylensulfid) oder PPA (Polyphthalamid). Das Außenteil 12 kann auch aus PA (Polyamid) oder POM (Polyoxymethylen) hergestellt sein, die zu den technischen Thermoplasten zählen. Auch der zweite Kunststoff kann ein Hochleistungsthermoplast sein, so dass auch Ausführungsformen denkbar sind, in denen das Verbindungsteil 18 und das Außenteil 12 aus demselben Kunststoff gefertigt werden. In diesem Fall bietet es sich aber an, den zweiten Kunststoff, aus dem das Verbindungsteil 18 gefertigt ist, faserverstärkt auszuführen, um die axiale Steifigkeit zu erhöhen. Insbesondere dann, wenn der zweite Kunststoff des Verbindungsteils 18 faserverstärkt ist, können auch weniger hochwertige und damit günstigere Kunststoffe wie technische Thermoplaste, beispielsweise teilkristalline Thermoplaste wie PET (Polyethylenterephthalat), PA (Polyamid) oder POM (Polyoxymethylen) einsetzen. Auch können Duroplaste wie Polyester verwendet werden. Je nach verwendetem Kunststoff können die betreffenden Teile im Spritzgussverfahren hergestellt werden.

Wie insbesondere aus der Figur 1B hervorgeht, welche das in Figur 1A dargestellte Zahnrad entlang der in Figur 1 definierten Schnittebene A-A geschnitten darstellt, bildet das Verbindungsteil 18 ausgehend von der Drehachse D eine radial äußere erste Stirnfläche 20a, eine radial innere erste Stirnfläche 20i, eine radial äußere zweite Stirnfläche 22a und eine radial innere zweite Stirnfläche 22i. Axial entlang der Drehachse D gesehen steht die radial innere erste Stirnfläche 20i gegenüber der radial äußeren ersten Stirnfläche 20a über. Entsprechend steht die radial innere zweite Stirnfläche 22i gegenüber der radial äußeren zweiten Stirnfläche 22a über.

Ausgehend von den ersten Stirnflächen 20a, 20i weist das Verbindungsteil 18 eine erste Vertiefung $24_1$ und ausgehend von den zweiten Stirnflächen 22a, 22i eine zweite Vertiefung $24_2$ mit jeweils einem durchgängigen Vertiefungsgrund 26 auf. Das Verbindungsteil 18 ist folglich vollständig geschlossen und weist keine entlang der Drehachse D verlaufenden Durchbrüche auf. Aus Figur 1A ist ersichtlich, dass das Verbindungsteil 18 mit einer Anzahl von Rippen 27 ausgestattet ist, welche sich ausgehend von den Vertiefungsgründen 26 zu den jeweiligen Stirnflächen 20, 22 hin erstrecken, von denen die betreffende Vertiefung $24_1$, $24_2$ ausgeht. Die Rippen weise eine Rippenstärke RB auf, auf die später noch genauer eingegangen wird. Die Rippenstärke RB beschreibt die maximale Breite der Rippen in einer senkrecht zur Drehachse D verlaufenden Ebene.

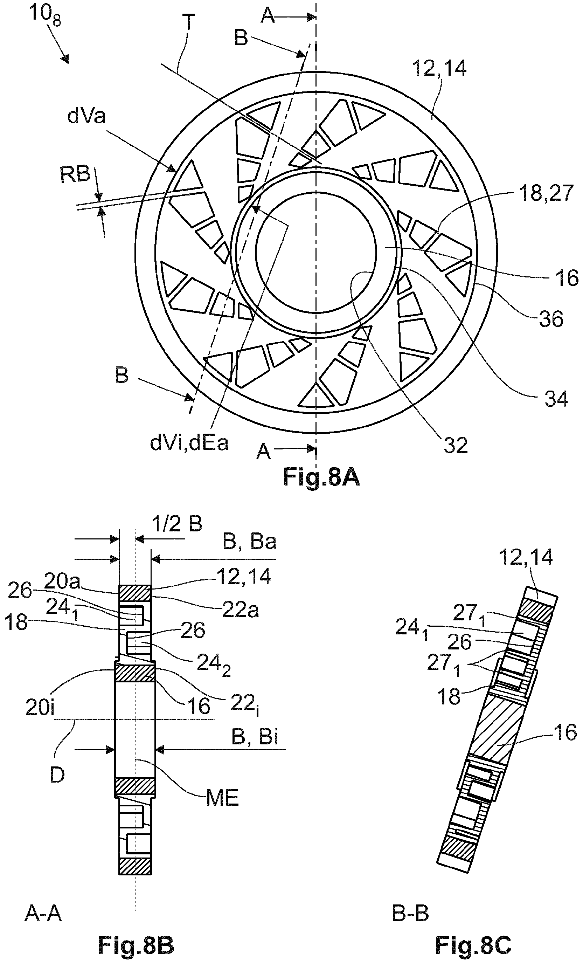

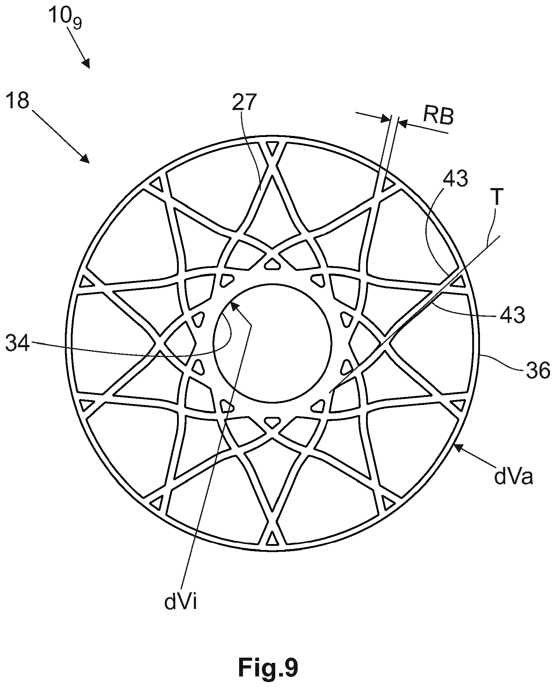

Aus der Figur 1B ist gut erkennbar, dass das Verbindungsteil 18 in radialer Richtung erste Hinterschneidungen 28 aufweist, welche eine formschlüssige Verbindung mit dem Außenteil 12 herstellen. Weiterhin weist das Verbindungsteil 18 in axialer Richtung zweite Hinterschneidungen 30 auf, mit denen das Verbindungsteil 18 formschlüssig mit dem Einlegeteil 16 verbunden ist. Um zu verhindern, dass das Verbindungsteil 18 in Umfangsrichtung gegenüber dem Außenteil 12 und dem Einlegteil verrutscht, ist das Verbindungsteil 18 formschlüssig mit dem Außenteil 12 und ebenfalls formschlüssig mit dem Einlegeteil 16 verbunden. Das Einlegeteil 16 weist einen Aufnahmeabschnitt 32 auf und ist im ersten Ausführungsbeispiel hülsenförmig ausgestaltet, so dass ein hier nicht dargestelltes benachbart angeordnetes Bauteil 44 (vgl. Figuren 8 und 9), beispielsweise eine konzentrisch zur Drehachse D verlaufende Welle, so mit dem Einlegeteil 16 verbunden werden kann, dass ein Drehmoment zwischen dem Zahnrad $10_1$ und dem benachbart angeordneten Bauteil 44 übertragen werden kann. Das Einlegteil 16 umschließt in diesem Ausführungsbeispiel das benachbart angeordnete Bauteil 44. Das Einlegeteil 16 tritt an einem im Folgenden als drehmomentübertragenden Durchmesser dD mit dem benachbart angeordneten Bauteil in Kontakt. Im ersten Ausführungsbeispiel entspricht der drehmomentübertragende Durchmesser dD einem Einle-geteil-Innendurchmesser dEi. Zudem weist das Einlegeteil 16 einen Einlegeteil-Außendurchmesser dEa auf, an welchem das Einlegeteil mit dem Verbindungsteil 18 in Kontakt steht. Auf die Bedeutung des Einlegeteil-Außendurchmessers dEa wird im Folgenden noch im Detail eingegangen. Wie aus Figur 1B ersichtlich, nimmt der Einlegeteil-Außendurchmesser dEa zu der inneren ersten Stirnfläche 20i und zu der inneren zweiten Stirnfläche 22i hin stufenartig ab. Im Folgenden soll für den Fall, dass das Einlegeteil mehrere Einlegteil-Außendurchmesser dEa aufweist, der relevante Einlegeteil-Außendurchmesser dEa der größte Einlegeteil-Außendurchmesser dEa sein.

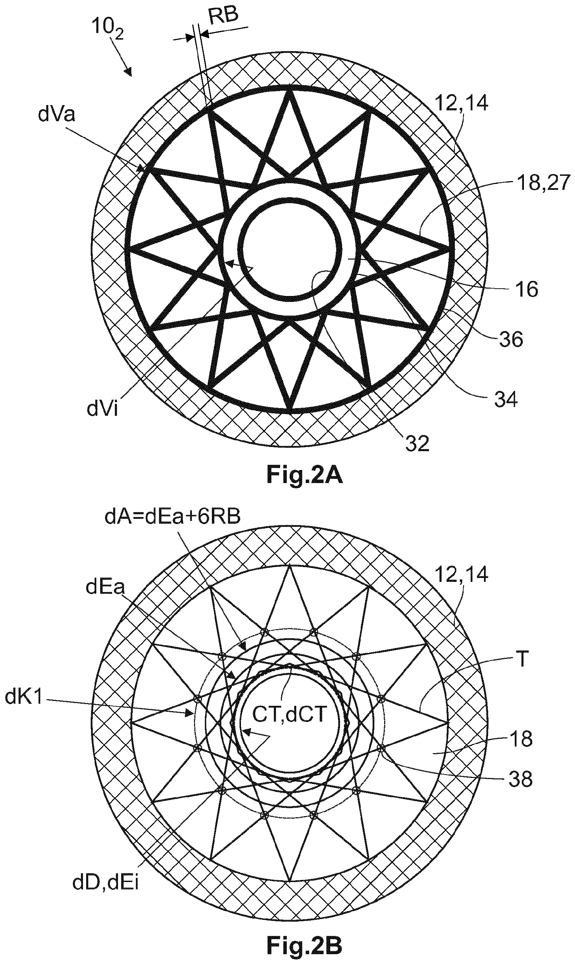

In Figur 2A ist ein zweites Ausführungsbeispiel des erfindungsgemäßen Zahnrads $10_2$ anhand einer prinzipiellen Schnittdarstellung gezeigt, wobei die Schnittebene senkrecht zur Drehachse D (siehe Figur 1B) verläuft. Zur Erläuterung des Verlaufs der Rippen 27 sind in der Figur 2B die notwendigen Hilfskurven und Hilfslinien dargestellt.

Die Rippen 27 verlaufen entlang von Tangenten T, die an einem Tangentenkreis CT anliegen. Folglich sind im zweiten Ausführungsbeispiel die Rippen 27 gerade und weisen in einer Ebene senkrecht zur Drehachse D keine Krümmung oder Wölbungen auf. An dieser Stelle sei bereits auf das in Figur 9 dargestellte Ausführungsbeispiel des erfindungsgemäßen Zahnrads $10_9$ hingewiesen, bei welcher die Rippen Krümmungen oder Wölbungen aufweisen. Der Tangentenkreis CT weist einen Tangentenkreisdurchmesser dCT auf, der im zweiten Ausführungsbeispiel des erfindungsgemäßen Zahnrads $10_2$ auf dem Einlegeteil 16 liegt. Hieraus folgt, dass der Tangentenkreisdurchmesser dCT größer als ein oder gleich dem Einlegeteil-Innendurchmesser dEi und kleiner als ein oder gleich als ein maximaler Durchmesser dA, der wie folgt definiert ist:

$$dA = dEa + 6\ RB.$$

Mit anderen Worten verlaufen die Tangenten so, dass der von ihnen gebildete Tangentenkreis CT einen Tangentenkreisdurchmesser dCT aufweist, der in einem ringförmigen Bereich liegt, dessen Untergrenze von dem drehmomentübertragenden Durchmesser dD, der in diesem Fall mit dem Einlegeteil-Innendurchmesser dEi zusammenfällt, und dessen Obergrenze vom maximalen Durchmesser dA begrenzt werden, der um das sechsfache der Rippenstärke RB größer ist als der Einlegeteil-Außendurchmesser dEA. . Im dargestellten Ausführungsbeispiel ist der Tangentenkreisdurchmesser dCT kleiner als der Einlegeteil-Außendurchmesser dEa. Mathematisch zusammenfassend ausgedrückt gilt:

$$dD = dEi \leq dCT \leq dA = dEa + 6RB$$

Bevorzugt ist der maximale Durchmesser dA wie folgt definert:

$$dA = dEa + 4\ RB.$$

Aufgrund der Tatsache, dass im zweiten Ausführungsbeispiel des erfindungsgemäßen Zahnrads $10_2$ die Rippen 27 auf dem Verbindungsteil 18, der Tangentenkreis CT aber auf dem Einlegeteil 16 angeordnet sind, können die Rippen 27 den Tangentenkreis CT nicht berühren. Folglich können zwei voneinander vom Einlegeteil 16 getrennte Rippen 27 auf derselben Tangente T verlaufen. Im in Figur 2A dargestellten Ausführungsbeispiel verläuft auf einer Tangente T nur eine Rippe 27, während im in Figur 1A dargestellten Beispiel auf einer Tangente T zwei vom Einlegeteil 16 getrennte Rippen 27 verlaufen. Exemplarisch ist in Figur 1A eine Tangente T dargestellt.

Darüber hinaus weist das Verbindungsteil 18 einen sich radial nach außen dem Einlegeteil 16 anschließenden kreisringförmigen inneren Verbindungsabschnitt 34, mit welchem die Rippen 27 radial nach innen verbunden sind, und einen sich radial nach innen dem Außenteil 12 anschließenden kreisförmigen äußeren Verbindungsabschnitt 36 auf, mit welchem die Rippen 27 radial nach außen verbunden sind.

Wie aus den Figuren 1A und 2A hervorgeht, treffen sich zwei Rippen 27 im Bereich eines Außendurchmessers dVa des Verbindungsteils 18. Darüber hinaus ist die Anzahl der Tangenten T so gewählt, dass sich zwei Rippen 27 kreuzen. Die so entstehenden ersten Knotenpunkte 38 liegen auf einem ersten Kreuzungsdurchmesser dK1, der radial nach außen gesehen in etwa bei einem Viertel des Abstands zwischen einem Innendurchmesser dVi und dem Außendurchmesser dVa des Verbindungsteils 18 liegt. Hiervon abweichende Gestaltungen sind denkbar.

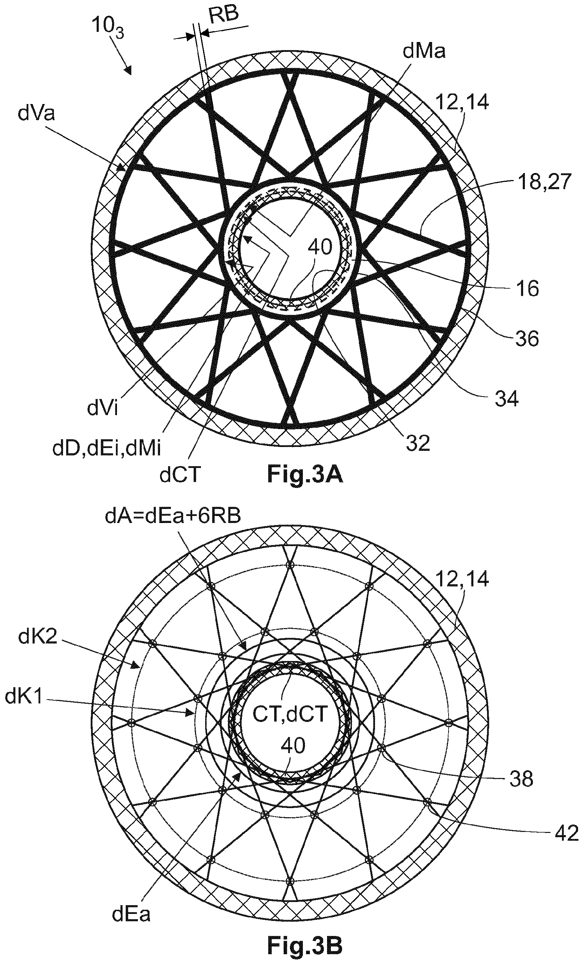

In Figur 3A ist ein drittes Ausführungsbeispiel des erfindungsgemäßen Zahnrads $10_3$ anhand einer prinzipiellen Schnittdarstellung gezeigt, wobei die Schnittebene senkrecht zur Drehachse D (siehe Figur 1B) verläuft. Zur Erläuterung des Verlaufs der Rippen 27 sind in der Figur 3B die notwendigen Hilfskurven und Hilfslinien dargestellt.

Das Zahnrad $10_3$ nach dem dritten Ausführungsbeispiel gleicht weitgehend dem Zahnrad $10_2$ nach dem zweiten Ausführungsbeispiel, allerdings kreuzt sich eine Rippe 27 nicht nur mit einer weiteren Rippe 27, sondern mit zwei weiteren Rippen 27, so dass zweite Knotenpunkte 42 entstehen, die auf einem zweiten Kreuzungsdurchmesser dK2 liegen. Der zweite Kreuzungsdurchmesser dK2 ist größer als der erste Kreuzungsdurchmesser dK1 und liegt radial nach außen gesehen in etwa bei sieben Achtel des Abstands zwischen dem Innendurchmesser dVi und dem Außendurchmesser dVa des Verbindungsteils 18.

Das Einlegeteil 16 des Zahnrads $10_3$ nach dem dritten Ausführungsbeispiel weist eine Mitnahmeverzahnung 40 mit einem Mitnahmeverzahnungsinnendurchmesser dMi und einem Mitnahmeverzahnungsaußendurchmesser dMa auf. Der Mitnahmeverzahnungsinnendurchmesser dMi entspricht dem drehmomentübertragenden Durchmesser dD und dem Einlegeteil-Innendurchmesser dEi. In diesem Fall ist der Tangentenkreisdurchmesser dCT größer als der oder gleich dem Mitnahmeverzahnungsinnendurchmesser dMi und kleiner als der oder gleich dem Mitnahmeverzahnungsaußendurchmesser dMa, wobei die oben angegebene Beziehung eingehalten wird, wonach gilt:

$$dD \leq dCT \leq dA = dEa + 6RB$$

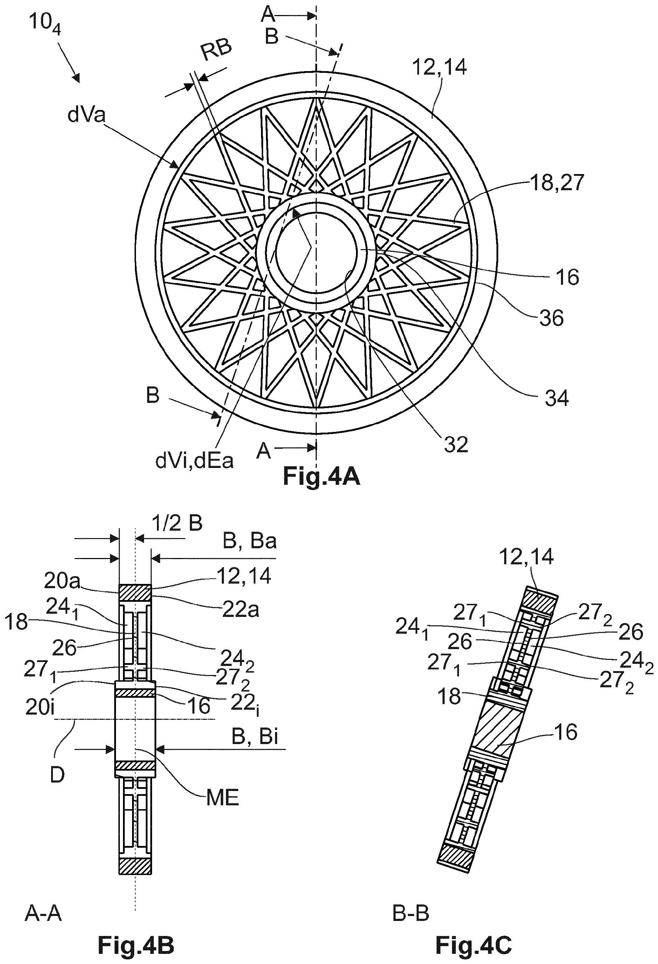

In den Figuren 4A bis 4C ist ein viertes Ausführungsbeispiel des erfindungsgemäßen Zahnrads $10_4$ anhand von verschiedenen Darstellungen gezeigt. Figur 4A ist eine Seitenansicht auf das Zahnrad $10_4$ nach dem vierten Ausführungsbeispiel, während Figur 4B eine Schnittdarstellung entlang der in Figur 4A definierten Schnittebene A-A und Figur 4B eine Schnittdarstellung entlang der in Figur 4A definierten Schnittebene B-B sind. Man erkennt, dass auch das Zahnrad $10_4$ nach dem vierten Ausführungsbeispiel die radial äußere erste Stirnfläche 20a und die radial innere erste Stirnfläche 20i, die radial äußere zweite Stirnfläche 22a und die radial innere zweite Stirnfläche 22i aufweisen. Die radial äußere erste Stirnfläche 20a und die radial innere erste Stirnfläche 20i sind in Bezug entlang der Drehachse D gesehen axial versetzt angeordnet und fluchten nicht. Auch die radial äußere zweite Stirnfläche 22a und die radial innere zweite Stirnfläche 22i fluchten bezogen auf die Drehachse D axial nicht. Das Zahnrad $10_4$ weist daher eine innere Breite Bi und eine äußere Breite Ba auf, die nicht gleich sind. Im dargestellten Ausführungsbeispiel ist die äußere Breite Ba geringer als die innere Breite Bi.

Die erste Vertiefung $24_1$ geht von der radial äußeren ersten Stirnfläche 20a und von der radial inneren ersten Stirnfläche 20i aus. Entsprechend geht die zweite Vertiefung $24_2$ von der radial äußeren zweiten Stirnfläche 22a und von der radial inneren zweiten Stirnfläche 22i aus. Gut zu erkennen ist, dass die Rippen 27 vom Vertiefungsgrund 26 ausgehen und sich in Richtung derjenigen Stirnflächen 20, 22 erstrecken, von denen die betreffenden Vertiefungen 24 ausgehen. Das Verbindungsteil 18 ist bezogen auf eine senkrecht zur Drehachse D verlaufende Mittelebene ME symmetrisch aufgebaut.

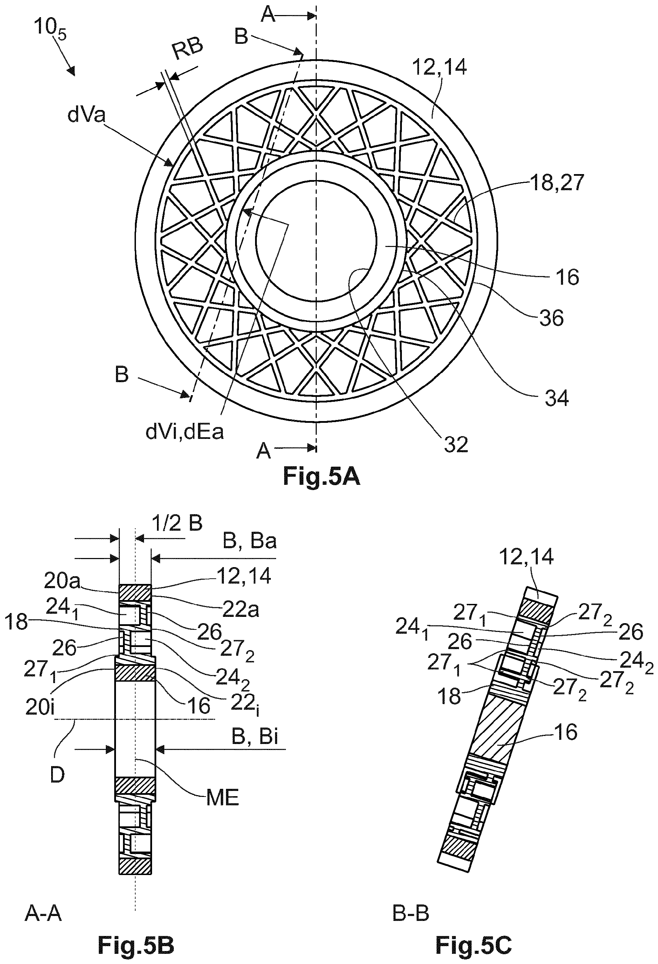

In den Figuren 5A bis 5C ist ein fünftes Ausführungsbeispiel des erfindungsgemäßen Zahnrads $10_5$ anhand von verschiedenen Darstellungen gezeigt. Figur 5A ist eine Seitenansicht auf das Zahnrad $10_5$ nach dem fünften Ausführungsbeispiel, während Figur 5B eine Schnittdarstellung entlang der in Figur 5A definierten Schnittebene A-A und Figur 5B eine Schnittdarstellung entlang der in Figur 5A definierten Schnittebene B-B sind. In diesem Ausführungsbeispiel ist die erste Vertiefung $24_1$ radial versetzt zur zweiten Vertiefung $24_2$ angeordnet. Weiterhin erstrecken sich die erste Vertiefung $24_1$ ausgehend von der äußeren ersten Stirnfläche 20a und die zweite Vertiefung $24_2$ ausgehend von der äußeren zweiten Stirnfläche 22a über mehr als die halbe äußere Breite Ba des Zahnrads $10_1$. Bezogen auf die für die Figur 5 gewählten Schnittebenen weist das Verbindungsteil 18 einen S-förmigen oder meanderförmigen Verlauf auf und ist bezogen auf eine senkrecht zur Drehachse D verlaufende Mittelebene ME nicht symmetrisch aufgebaut.

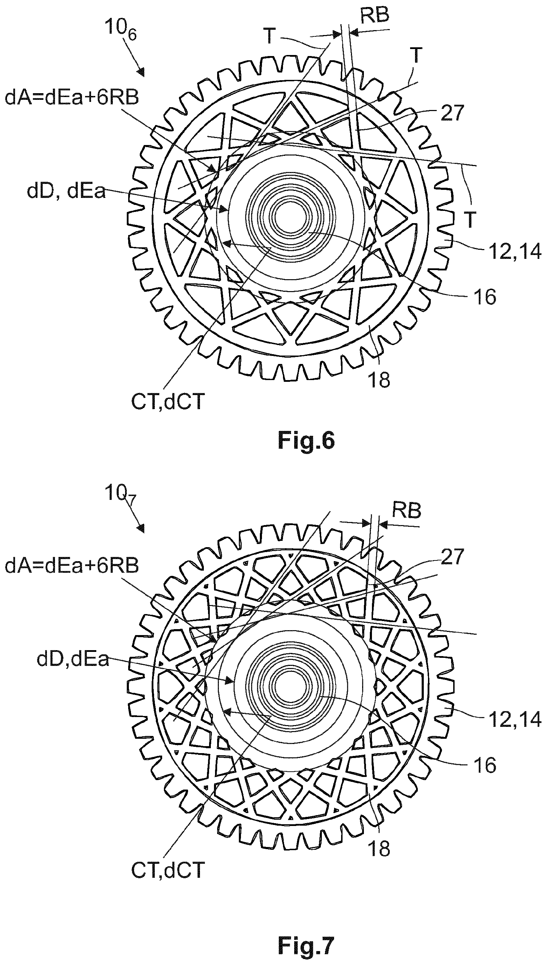

In den Figuren 6 und 7 sind ein sechstes Ausführungsbeispiel bzw. ein siebtes Ausführungsbeispiel eines vorschlagsgemäßen Zahnrads $10_6$, $10_7$ anhand einer Seitenansicht gezeigt. Die Zahnräder $10_6$, $10_7$ nach dem sechsten Ausführungsbeispiel und dem siebten Ausführungsbeispiel unterscheiden sich von den übrigen Zahnrädern $10_1$ bis $10_5$ unter anderem in der Anzahl der Rippen 27 und in den Winkeln, den die Rippen 27 zueinander einschließen. Zudem ist das Einlegeteil 16 in diesem Fall nicht hülsenförmig ausgebildet, sondern als Vollwelle, so dass hier kein Einlegeteil-Innendurchmesser dEi definiert werden kann oder dieser gleich null ist (siehe auch Figur 8). Die Vollwelle soll einen konstanten Einlegeteil-Außendurchmesser dEa aufweisen, so dass dieser im sechsten Ausführungsbeispiel des vorschlagsgemäßen Zahnrads $10_6$ dem drehmomentübertragenden Durchmesser entspricht. Entsprechendes gilt für das sechste Ausführungsbeispiel des vorschlagsgemäßen Zahnrads $10_7$.

In den Figuren 8A bis 8C ist ein achtes Ausführungsbeispiel des erfindungsgemäßen Zahnrads $10_8$ anhand von verschiedenen Darstellungen gezeigt. Figur 8A ist eine Seitenansicht auf das Zahnrad $10_8$ nach dem achten Ausführungsbeispiel, während Figur 8B eine Schnittdarstellung entlang der in Figur 8A definierten Schnittebene A-A und Figur 8B eine Schnittdarstellung entlang der in Figur 8A definierten Schnittebene B-B sind. Während in den zuvor beschriebenen Ausführungsformen die Rippen 27 symmetrisch zu einer durch die Drehachse D verlaufende Spiegelebene angeordnet sind, mit anderen Worten eine erste Gruppe von Rippen ausgehend vom Außenteil 12 nach links und eine zweite Gruppe nach rechts verläuft, bilden die Rippen 27 im achten Ausführungsbeispiel des erfindungsgemäßen Zahnrads $10_8$ nur eine Gruppe. Ausgehend vom Außenteil 12 verlaufen sie bezogen auf die in Figur 8A gewählte Darstellung nur nach links. Wie insbesondere aus den Figuren 8B und 8C zu erkennen, weist das Verbindungsteil 18 einen S-förmigen oder meanderförmigen Verlauf auf und ist bezogen auf eine senkrecht zur Drehachse D verlaufende Mittelebene ME nicht symmetrisch aufgebaut, wie es auch bei dem in den Figuren 5A bis 5C dargestellten fünften Ausführungsbeispiel des erfindungsgemäßen Zahnrads $10_5$ der Fall ist.

In Figur 9 ist ein Verbindungsteil 18 eines neunten Ausführungsbeispiels des erfindungsgemäßen Zahnrads $10_9$ anhand einer Seitenansicht dargestellt. Das hier nicht dargestellte Außenteil 12 und das ebenfalls nicht dargestellte Einlegeteil 16 können genauso aufgebaut sein, wie für die zuvor erläuterten Ausführungsbeispiele gezeigt. Der wesentliche Unterschied des neunten Ausführungsbeispiels des erfindungsgemäßen Zahnrads $10_9$ gegenüber den übrigen Ausführungsbeispielen des Zahnrads $10_1$ bis $10_8$ besteht im Verlauf der Rippen 27. Während die Rippen 27 in den Ausführungsbeispielen übrigen Ausführungsbeispielen des Zahnrads $10_1$ bis $10_8$ gerade verlaufen, also keine Krümmungen oder Wölbungen aufweisen, weisen die Rippen 27 im neunten Ausführungsbeispiel des Zahnrads $10_9$ Krümmungen oder Wölbungen auf. Dabei sind die Krümmungen oder Wölbungen so ausgebildet, dass die Rippen 27 nie außerhalb der Tangenten T des Tangentenkreises CT mit dem eingangs definierten Tangentenkreisdurchmesser dCT verlaufen, wobei die Seitenwände 43 der Rippen 27 abschnittsweise die Tangente T berühren können.

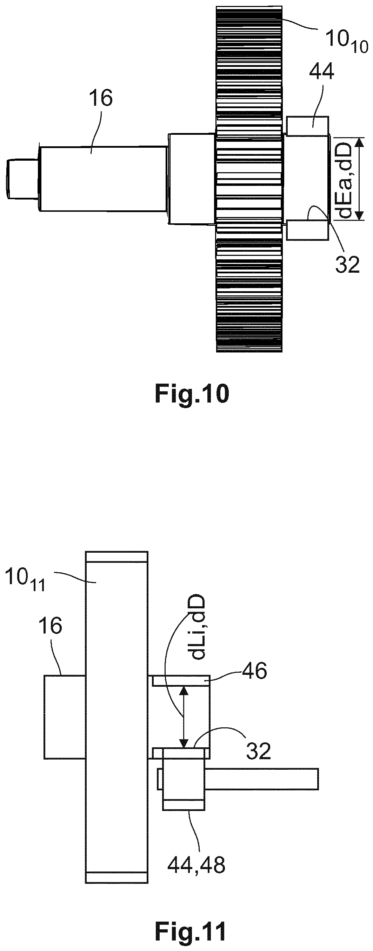

Figur 10 zeigt ein zehntes Ausführungsbeispiel des erfindungsgemäßen Zahnrads $10_{10}$ anhand einer Draufsicht. Man erkennt, dass das Einlegeteil 16 das Zahnrad $10_{10}$ vollständig durchdringt. Bezogen auf die in Figur 10 gewählte Darstellung ist auf der rechten Seite ein benachbart angeordnetes Bauteil 44 mit dem Einlegeteil 16 verbunden. Das benachbart angeordnete Bauteil 44 umschließt das Einlegeteil 16 im Aufnahmeabschnitt 32 und tritt am Einlegeteil-Außendurchmesser dEa mit dem Aufnahmeabschnitt 32 des Einlegteils 16 in Kontakt. Der Eilegeteil-Außendurchmesser dEa entspricht in diesem Fall dem drehmomentübertragenden Durchmesser dD.

In Figur 11 ist ein neuntes Ausführungsbeispiel des erfindungsgemäßen Zahnrads $10_{11}$ anhand einer prinzipiellen Darstellung gezeigt. Auch in diesem Ausführungsbeispiel ist das Einlegeteil 16 als eine Vollwelle ausgestaltet, die im Aufnahmeabschnitt 32 eine Laufverzahnung 46 aufweist. Mit dieser Laufverzahnung 46 kämmt das benachbart angeordnete Bauteil 44 mit dem benachbart angeordneten Bauteil 44, welches in diesem Fall als ein Zahnrad 48 ausgebildet ist. Die Laufverzahnung 46 weist einen Laufverzahnungsinnendurchmesser dLi auf, der in diesem Fall dem drehmomentübertragenden Durchmesser dD entspricht.

Auch für die Zahnräder $10_6$ bis $10_{11}$ nach dem sechsten bis elften Ausführungsbeispiel gilt die oben genannte Beziehung, wonach Tangentenkreisdurchmesser dCT in einem ringförmigen Bereich liegt, dessen Untergrenze von dem drehmomentübertragenden Durchmesser dD und dessen Obergrenze vom maximalen Durchmesser dA begrenzt werden, der um das sechsfache der Rippenstärke RB größer ist als der Einlegeteil-Außendurchmesser dEA.

$$dD \leq dCT \leq dA = dEa + 6RB$$

Bezugszeichenliste

| | |
|---|---|
| 10 | Zahnrad |
| $10_1$ bis $10_5$ | Zahnrad nach verschiedenen Ausführungsbeispielen |
| 12 | Außenteil |
| 14 | Zahnkranz |
| 16 | Einlegeteil |
| 18 | Verbindungsteil |
| | |
| 20 | erste Stirnfläche |
| 20a | äußere erste Stirnfläche |
| 20i | innere erste Stirnfläche |
| 22 | zweite Stirnfläche |
| 22a | äußere zweite Stirnfläche |
| 22i | innere zweite Stirnfläche |
| 24 | Vertiefung |
| $24_1$ | erste Vertiefung |
| $24_2$ | zweite Vertiefung |
| 26 | Vertiefungsgrund |
| 27 | Rippen |
| 28 | erste Hinterschneidungen |
| | |
| 30 | zweite Hinterschneidungen |
| 32 | Aufnahmeabschnitt |
| 34 | innerer Verbindungsabschnitt |
| 36 | äußerer Verbindungsabschnitt |
| 38 | erste Knotenpunkte |

40    Mitnahmeverzahnung
42    zweite Knotenpunkte
43    Seitenwände Rippen
44    benachbart angeordnetes Bauteil
46    Laufverzahnung
B    Breite
Ba    äußere Breite
Bi    innere Breite
CT    Tangentenkreis
dA    maximaler Durchmesser
dCT    Tangentenkreisdurchmesser
dD    drehmomentübertragender Durchmesser
dEa    Einlegeteil-Außendurchmesser
dEi    Einlegeteil-Innendurchmesser
dK1    erster Kreuzungsdurchmesser
dK2    zweiter Kreuzungsdurchmesser
DMa    Mitnahmeverzahnungsaußendurchmesser
DMi    Mitnahmeverzahnungsinnendurchmesser
dVa    Außendurchmesser Verbindungsteil
dVi    Innendurchmesser Verbindungsteil
ME    Mittelebene
RB    Rippenstärke
T    Tangente

**Patentansprüche**

1. Zahnrad, umfassend

   - ein Einlegeteil (16), welches einen Einlegeteil-Außendurchmesser (dEa) und einen Aufnahmeabschnitt (32) mit einem drehmomentübertragenden Durchmesser (dD) zum Ausbilden einer Verbindung mit einem benachbart angeordneten Bauteil (44) aufweist, und
   - ein mit dem Einlegeteil (16) formschlüssig und/oder materialschlüssig und/oder reibschlüssig verbundenes Verbindungsteil (18) mit einem Zahnkranz (14),
   - wobei das Verbindungsteil (18) eine Anzahl von Rippen (27) aufweist oder das Verbindungsteil (18) von einer Anzahl von Rippen (27) gebildet wird,
   - die Rippen (27) entlang jeweils einer Tangente (T) verlaufen, die an einem Tangentenkreis (CT) anliegt,
   - die Rippen (27) eine Rippenstärke (RB) aufweisen, und
   - der Tangentenkreis (CT) einen Tangentenkreisdurchmesser (dCT) aufweist, der größer als der oder gleich dem drehmomentübertragenden Durchmesser (dD) und kleiner als der oder gleich einem maximalen Durchmesser (dA) ist, **dadurch gekennzeichnet, dass** der maximalen Durchmesser (dA) wie folgt definiert ist:

$$dA = dEa + 6\ RB$$

2. Zahnrad nach Anspruch 1,
   **dadurch gekennzeichnet, dass** der Aufnahmeabschnitt (32) einen Einlegeteil-Innendurchmesser (dEi) zum Ausbilden einer Wellen-Naben-Verbindung mit dem benachbart angeordneten Bauteil (44) aufweist, der dem drehmomentübertragenden Durchmesser (dD) entspricht.

3. Zahnrad nach Anspruch 2,
   **dadurch gekennzeichnet, dass** der Aufnahmeabschnitt (32) eine Mitnahmeverzahnung (40) zum Ausbilden der Wellen-Naben-Verbindung aufweist, wobei die Mitnahmeverzahnung (40) einen Mitnahmeverzahnungsinnendurchmesser (DMi) aufweist, der dem drehmomentübertragenden Durchmesser (dD) entspricht, und der Tangentenkreisdurchmesser (dCT) größer als der oder gleich dem Mitnahmeverzahnungsinnendurchmesser (DMi) ist.

4. Zahnrad nach Anspruch 1,
   **dadurch gekennzeichnet, dass** der Einlegeteil-Außendurchmesser (dEa) dem drehmomentübertragenden Durchmesser (dD) entspricht.

5. Zahnrad nach Anspruch 4,
**dadurch gekennzeichnet, dass** der Aufnahmeabschnitt (32) eine Laufverzahnung (46) zum Ausbilden einer Laufverbindung aufweist, wobei die Laufverzahnung (40) einen Laufverzahnungsinnendurchmesser (DLi) aufweist, der dem drehmomentübertragenden Durchmesser (dD) entspricht, und der Tangentenkreisdurchmesser (dCT) größer als der oder gleich dem Laufverzahnungsinnendurchmesser (DLi) ist.

6. Zahnrad einem der vorherigen Ansprüche,
**dadurch gekennzeichnet, dass** jeweils zwei Rippen (27) im Verbindungsteil-Außendurchmesser (dVa) oder im Bereich des Verbindungsteil-Außendurchmessers (dVa) miteinander verbunden sind.

7. Zahnrad einem der vorherigen Ansprüche,
**dadurch gekennzeichnet, dass** der Verlauf der Rippen (27) so gewählt ist, dass sich zumindest zwei Rippen (27) kreuzen.

8. Zahnrad nach einem der vorherigen Ansprüche,
**dadurch gekennzeichnet, dass** das Verbindungsteil (18) einen sich radial nach außen dem Einlegeteil (16) anschließenden kreisringförmigen inneren Verbindungsabschnitt (34) aufweist, mit welchem die Rippen (27) radial nach innen verbunden sind.

9. Zahnrad nach einem der vorherigen Ansprüche,
**dadurch gekennzeichnet, dass** das Verbindungsteil (18) eine erste Stirnfläche (20) und eine zweite Stirnfläche (22) bildet, wobei das Verbindungsteil (18) zumindest eine Vertiefung (24) aufweist, welche von einer der beiden Stirnflächen (20, 22) ausgeht und einen Vertiefungsgrund (26) bildet, wobei sich die Rippen (27) ausgehend vom Vertiefungsgrund (26) zu derjenigen Stirnfläche (20) hin oder über diejenige Stirnfläche (20, 22) hinaus erstrecken, von welcher die Vertiefung (24) ausgeht.

10. Zahnrad nach Anspruch 9,
**dadurch gekennzeichnet, dass** das Verbindungsteil (18) zumindest eine erste Vertiefung ($24_1$) und zumindest eine zweite Vertiefung ($24_2$) aufweist, wobei die erste Vertiefung ($24_1$) von der ersten Stirnfläche (20) und die zweite Vertiefung ($24_2$) von der zweiten Stirnfläche (22) ausgehen.

11. Zahnrad nach Anspruch 10,
**dadurch gekennzeichnet, dass** die ersten Vertiefungen ($24_1$) und/oder die zweiten Vertiefungen ($24_2$) radial und/oder in Umfangrichtung zu einer Drehachse des Zahnrads (10) versetzt angeordnet sind.

12. Zahnrad nach Anspruch 11,
**dadurch gekennzeichnet, dass** die ersten Vertiefungen ($24_1$) zwischen den zweiten Vertiefungen ($24_2$) liegen.

13. Zahnrad nach Anspruch 12,
**dadurch gekennzeichnet, dass** das Zahnrad (10) eine Breite (B) aufweist und sich die ersten Vertiefungen ($24_1$) ausgehend von der ersten Stirnfläche (20) und sich die zweiten Vertiefungen ($24_2$) ausgehend von der zweiten Stirnfläche (22) über mehr als die halbe Breite (B) erstrecken.

14. Zahnrad nach einem der Ansprüche 10 bis 13,
**dadurch gekennzeichnet, dass** in der ersten Vertiefung ($24_1$) eine Anzahl von ersten Rippen ($27_1$) und in der zweiten Vertiefung ($24_2$) eine Anzahl von zweiten Rippen ($27_2$) angeordnet sind, die in Umfangrichtung versetzt zueinander angeordnet sind.

15. Zahnrad nach einem der vorherigen Ansprüche,
**dadurch gekennzeichnet, dass** das Einlegeteil (16) aus Metall gefertigt ist.

16. Zahnrad nach einem der vorherigen Ansprüche,
**dadurch gekennzeichnet, dass** das Verbindungsteil (18) aus einem Kunststoff gefertigt ist.

17. Zahnrad nach einem der vorherigen Ansprüche,
**dadurch gekennzeichnet, dass** der Zahnkranz (14) von einem Außenteil (12) gebildet wird, welches mit dem Verbindungsteil (18) formschlüssig und/oder materialschlüssig und/oder reibschlüssig verbunden ist.

**18.** Zahnrad nach einem der vorherigen Ansprüche,
**dadurch gekennzeichnet, dass** das Verbindungsteil einen sich radial nach innen dem Außenteil (12) anschließenden kreisförmigen äußeren Verbindungsabschnitt (36) aufweist, mit welchem die Rippen (27) radial nach außen verbunden sind.

**19.** Zahnrad nach einem der Ansprüche 16 bis 18,
**dadurch gekennzeichnet, dass** das Außenteil (12) aus einem ersten Kunststoff und das Verbindungsteil (18) einem zweiten Kunststoff gefertigt sind und der erste Kunststoff ein Hochleistungsthermoplast oder ein technischer Thermoplast und/oder der zweite Kunststoff ein Hochleistungsthermoplast, ein technischer Thermoplast oder ein Duroplast sind.

**Claims**

**1.** Gear wheel, comprising

- an insertion part (16), which comprises an insertion part out diameter (dEa) and a reception segment (32) with a torque transmitting diameter (dD) for forming a connection to an adjacently arranged component (44), and
- a connection part (18) with a gear rim (14), connected to the insertion part (16) in a form-locking and/or material-locking and/or friction-locking manner
- wherein the connection part (18) comprises numerous ribs (27) or the connection part (18) is formed of numerous ribs (27),
- each of the ribs (27) extend along a tangent (T) which adjoins to a tangent circle (CT),
- the ribs (27) comprise a rib thickness (RB), and
- the tangent circle (CT) comprises a tangent circle diameter (dCT) which is larger than or equal to the torque transmitting diameter (dD) and smaller than or equal to a maximum diameter (dA),

**characterized in that** the maximum diameter (dA) is defined as follows:

$$dA = dEa + 6\,RB.$$

**2.** Gear wheel in accordance with claim 1,
**characterized in that** the reception segment (32) comprises an insertion part inner diameter (dEi), for forming a shaft hub connection to the adjacently arranged component (44), which corresponds to the torque transmitting diameter (dD).

**3.** Gear wheel in accordance with claim 2,
**characterized in that** the reception segment (32) comprises an engaging toothing (40) for forming a shaft hub connection, wherein the engaging toothing (40) comprises an engaging toothing inner diameter (DMi) which corresponds to the torque transmitting diameter (dD), and the tangent circle diameter (dCT) is larger than or equal to the engaging toothing inner diameter (DMi).

**4.** Gear wheel in accordance with claim 1,
**characterized in that** the insertion part outer diameter (dEa) corresponds to the torque transmitting diameter (dD).

**5.** Gear wheel in accordance with claim 4,
**characterized in that** the reception segment (32) comprises a running toothing (46) for forming a running connection, wherein the running toothing (46) comprises a running toothing inner diameter (DLi), which corresponds to the torque transmitting diameter (dD), and the tangent circle diameter (dCT) is larger than or equal to the running toothing inner diameter (DLi).

**6.** Gear wheel in accordance with any of the preceding claims,
**characterized in that** each of two ribs (27) are connected to each other in the connection part outer diameter (dVa) or in the region of the connection part outer diameter (dVa).

**7.** Gear wheel in accordance with any of the preceding claims,
**characterized in that** the extension of the ribs (27) is selected such that at least two ribs (27) intersect.

**8.** Gear wheel in accordance with any of the preceding claims,
**characterized in that** the connection part (18) comprises a circular inner connection segment (34) which adjoins the insertion part (16) radially outwards and to which the ribs (27) are radially inwards connected.

**9.** Gear wheel in accordance with any of the preceding claims,
**characterized in that** the connection part (18) forms a first end face (20) and a second end face (22), wherein the connection part (18) comprises at least one recess (24) which extends from the two end faces (20, 22) and forms a recess bottom (26), wherein the ribs extend outwards from the recess bottom (26) towards the end face (20) or beyond the end faces (20, 22) from which the recess (24) extends.

**10.** Gear wheel in accordance with claim 9,
**characterized in that** the connection part (18) comprises at least one first recess ($24_1$) and at least one second recess ($24_2$), wherein the first recess ($24_1$) extends from the first end face (20) and the second recess ($24_2$) extends from the second end face (22).

**11.** Gear wheel in accordance with claim 10,
**characterized in that** the first recesses ($24_1$) and/or the second recesses ($24_2$) are arranged radially and/or offset in circumferential direction to an axis of rotation of the gear wheel (10).

**12.** Gear wheel in accordance with claim 11,
**characterized in that** the first recesses ($24_1$) lie between the second recesses ($24_2$).

**13.** Gear wheel in accordance with claim 12,
**characterized in that** the gear wheel (10) comprises a width (B) and **in that** the first recesses ($24_1$), extending from the first end face (20), and the second recesses ($24_2$), extending from the second end face (22), extend over more than half the width (B).

**14.** Gear wheel in accordance with any of claims 10 to 13,
**characterized in that** numerous first ribs ($27_1$) are arranged in the first recess ($24_1$) and **in that** numerous second ribs ($27_2$) are arranged in the second recess ($24_2$) which are arranged offset to each other in circumferential direction.

**15.** Gear wheel in accordance with any of the preceding claims,
**characterized in that** the insertion part (16) is made of metal.

**16.** Gear wheel in accordance with any of the preceding claims,
**characterized in that** the connection part (18) is made of a plastic.

**17.** Gear wheel in accordance with any of the preceding claims,
**characterized in that** the gear rim (14) is formed of an outer part (12) which is connected to the connection part (18) in a form-locking and/or material-locking and/or friction locking manner.

**18.** Gear wheel in accordance with any of the preceding claims,
**characterized in that** the connection part comprises a circular outer connection segment (36) which adjoins the outer part (12) radially inwards and to which the ribs (27) are radially outwards connected.

**19.** Gear wheel in accordance with any of claims 16 to 18,
**characterized in that** the outer part (12) is made of a first plastic and the connection part (18) is made of a second plastic and **in that** the first plastic is a high-performance thermoplastic or an engineering thermoplastic and/or the second plastic is a high-performance thermoplastic, an engineering thermoplastic or a thermoset.

**Revendications**

**1.** Roue dentée comprenant :

- un insert (16) ayant un diamètre extérieur d'insert (dEa) et un segment de réception (32) ayant un diamètre (dD) de transmission de couple pour réaliser une liaison avec un composant (44) voisin, et
- une pièce de liaison (18) reliée à une couronne dentée (14) par l'insert (16), par une liaison par la forme et/ou par la matière et/ou par le frottement,
* la pièce de liaison (18) ayant un ensemble de nervures (27) ou la pièce de liaison (18) est formée par un ensemble de nervures (27),
- les nervures (27) sont orientées chacune selon une tangente (T) appliquée contre un cercle de contact (CT),
- les nervures (27) ont une épaisseur (RB), et
- le cercle de contact (CT) a un diamètre de cercle de contact (dCT) supérieur ou égal au diamètre de transmission de couple (dD) et inférieur ou égal à un diamètre maximum (dA),

roue dentée **caractérisée en ce que**
le diamètre maximum (dA) est défini comme suit :

$$dA = dEa + 6\ RB$$

2. Roue dentée selon la revendication 1,
**caractérisée en ce que**
le segment récepteur (32) a un diamètre intérieur d'insert (dEi) pour réaliser une liaison arbre-moyeu avec le composant (44) voisin, et qui correspond au diamètre (dD) de transmission de couple.

3. Roue dentée selon la revendication 2,
**caractérisée en ce que**

le segment récepteur (32) a une denture d'entraînement (40) pour réaliser la liaison arbre-moyeu,
* la denture d'entraînement (40) ayant un diamètre intérieur de denture d'entraînement (DMi) qui correspond au diamètre de transmission de couple (dD) et le diamètre du cercle de contact (dCT) est supérieur ou égal au diamètre intérieur (DMi) de la denture d'entraînement.

4. Roue dentée selon la revendication 1,
**caractérisée en ce que**
le diamètre extérieur (dEa) de l'insert correspond au diamètre de transmission de couple (dD).

5. Roue dentée selon la revendication 4,
**caractérisée en ce que**

le segment récepteur (32) a une denture de circulation (46) pour réaliser une liaison de circulation,
* cette liaison de circulation (40) ayant un diamètre intérieur de denture de circulation (DLi) qui correspond au diamètre de transmission de couple (dD) et le diamètre du cercle tangent (dCT) est supérieur ou égal au diamètre intérieur de denture de circulation (DLi).

6. Roue dentée selon l'une des revendications précédentes,
**caractérisée en ce que**
respectivement deux nervures (27) reliées au diamètre extérieur de la pièce de liaison (dVa) ou dans la région du diamètre extérieur de la pièce de liaison (dVa).

7. Roue dentée selon l'une des revendications précédentes,
**caractérisée en ce que**
le tracé des nervures (27) est tel qu'au moins deux nervures (27) se croisent.

8. Roue dentée selon l'une des revendications précédentes,
**caractérisée en ce que**
la pièce de liaison (18) a un segment de liaison (34) intérieur, en forme d'anneau circulaire relié radialement vers l'extérieur à l'insert (16) et par lequel les nervures (27) sont reliées radialement vers l'intérieur.

9. Roue dentée selon l'une des revendications précédentes,
**caractérisée en ce que**

la pièce de liaison (18) forme une première surface frontale (20) et une seconde surface frontale (22),
* la pièce de liaison (18) ayant au moins une cavité (24) partant de l'une des deux surfaces frontales (20, 22) et formant un fond de cavité (26),
* les nervures (27), partant du fond de cavité (26) s'étendent vers la surface frontale (20) respective et au-delà de la surface frontale (20, 22) respective d'où est issue la cavité (24).

10. Roue dentée selon la revendication 9,
**caractérisée en ce que**

la pièce de liaison (18) a au moins une première cavité ($24_1$) et au moins une seconde cavité ($24_2$),
* la première cavité ($24_1$) étant issue de la première surface frontale (20) et la seconde cavité ($24_2$) étant issue de la seconde surface frontale (22).

11. Roue dentée selon la revendication 10,
**caractérisée en ce que**
les premières cavités ($24_1$) et/ou les secondes cavités ($24_2$) sont décalées radialement et/ou dans la direction périphérique par rapport à l'axe de rotation de la roue dentée (10).

12. Roue dentée selon la revendication 11,
**caractérisée en ce que**
les premières cavités ($24_1$) sont situées entre les secondes cavités ($24_2$).

13. Roue dentée selon la revendication 12,
**caractérisée en ce que**
la roue dentée (10) a une largeur (B) et les premières cavités ($24_1$) s'étendent à partir de la première surface frontale (20) et les secondes cavités ($24_2$) s'étendent à partir de la seconde surface frontale (22) sur plus de la moitié de la largeur (B).

14. Roue dentée selon l'une des revendications 10 à 13,
**caractérisée en ce que**
un ensemble de premières nervures ($27_1$) est prévu dans la première cavité ($24_1$) et un ensemble de secondes nervures ($27_2$) est prévu dans la seconde cavité ($24_2$), ces ensembles étant décalés l'un par rapport à l'autre dans la direction périphérique.

15. Roue dentée selon l'une des revendications précédentes,
**caractérisée en ce que**
l'insert (16) est en métal.

16. Roue dentée selon les revendications précédentes,
**caractérisée en ce que**
la pièce de liaison (18) est en matière plastique.

17. Roue dentée selon l'une des revendications précédentes,
**caractérisée en ce que**
la couronne dentée (14) est formée par une pièce extérieure (12) reliée à la pièce de liaison (18) par une liaison par la forme et/ou par la matière et/ou par le frottement.

18. Roue dentée selon l'une des revendications précédentes,
**caractérisée en ce que**
la pièce de liaison (36), extérieure, en forme de cercle, adjacent radialement à l'intérieur à la pièce extérieure (12), les nervures (27) étant reliées radialement vers l'extérieur à cette pièce de liaison.

19. Roue dentée selon l'une quelconque des revendications 16 à 18,
**caractérisée en ce que**
la pièce extérieure (12) est en une première matière plastique et la pièce de liaison (18) est en une seconde matière plastique, la première matière plastique étant une matière thermoplastique très résistante ou une matière thermoplastique technique et/ou la seconde matière plastique est une matière thermoplastique très résistante, un thermoplast technique ou un duroplast.

$10_1$

RB

A

A

12,14

T

32

dD,dEi

16

18

27

**Fig.1A**

$10_1$

20a

12,14

22a

28

$24_1$

26

$24_2$

26

20i

30

18

16

32

dEi

22i

dEa

D

A-A

**Fig.1B**

**Fig.2A**

$dA=dEa+6RB$

**Fig.2B**

**Fig.3A**

**Fig.3B**

$10_4$

RB

dVa

A

B

12,14

18,27

16

36

34

B

32

dVi,dEa

A

**Fig.4A**

1/2 B

B, Ba

20a

12,14

$24_1$

22a

18

26

$24_2$

$27_1$

$27_2$

20i

16

$22_i$

D

B, Bi

ME

A-A

**Fig.4B**

12,14

$24_1$

$27_1$

$27_2$

26

26

$24_2$

$27_1$

$27_2$

18

16

B-B

**Fig.4C**

**Fig.5A**

**Fig.5B**

A-A

B-B

**Fig.5C**

**Fig.6**

**Fig.7**

21

EP 3 789 635 B1

Fig.8A

A-A

Fig.8B

B-B

Fig.8C

22

Fig.9

**Fig.10**

**Fig.11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012102777 A1
- DE 102014003441 A1
- DE 102017201383 A1
- GB 989898 A
- DE 102004064237 B3
- DE 102009000014 A1
- EP 2899430 A1
- DE 10127224 A1
- EP 1777439 B1